# EUROPEAN PATENT APPLICATION

(11) **EP 2 816 509 A1**
(43) Date of publication of application: **24.12.2014**
(21) Application number: 13172247.2
(22) Date of filing: 17.06.2013
(51) Int. Cl.: G06K 19/16, G06K 19/06

(54) **An anti-counterfeit label device and method of making same**

(71) Applicant: University College Cork, Cork City (IE)
(72) Inventor: Burke, Michael, Cork (IE); Quinn, Aidan, Cork (IE); Manning, Mary, Cork (IE)
(74) Representative: Lucey, Michael

(57) **Abstract**

The invention provides a label comprising a substrate layer comprising a 3-D nanostructured geometry configured with a property that can be optically read or measured; and the 3-D nanostructured geometry is coated with a metal insulator metal (MIM) capacitive layer to provide an embedded unique electrical signal.

## Description

### Field of the Invention

The invention relates to an anti-counterfeit label device and method of making same.

### Background to the Invention

Counterfeit goods accounted for 1.95% in world trade. When factoring in the counterfeit market with the value of pirated digital material, the International Counterfeiting Coalition (ICC) estimates counterfeit goods were worth $650 billion in 2008.

This has spawned a global anti counterfeit market for food and pharmaceuticals alone that is expected to be worth US$79.3 billion by 2014.

This has resulted in many different types of anti-counterfeiting technologies available on the market today. These technologies are used in different markets, including pharmaceutical, cosmetic, food and electronic markets.

Current anti-counterfeiting technology options comprise a range of measures including serial numbers, Barcodes, Datamatrix and RFID for identification and Holograms, Biometric solutions, Watermarks and taggants for security. As the level of counterfeiting becomes more sophisticated, security gaps are emerging in these technologies leaving them open to exploitation.

Thus, there is an increasing need for development of added security features which are both technologically- and cost-prohibitive from a counterfeiters' perspective.

It is therefore an object of the invention to provide an improved anti-counterfeiting technology.

### Summary of the Invention

According to the invention there is provided, as set out in the appended claims, a label comprising:
a substrate layer comprising a 3-D nanostructured geometry configured with a property that can be optically read or measured; and
the 3-D nanostructured geometry is coated with a metal, metal-insulator or metal-insulator-metal (MIM) layer to provide an embedded unique electrical signal.

The invention provides an electrical signature to an optical/holographic anti-counterfeiting technology capable of being implemented across multiple anti-counterfeit platforms including security threads within currency. It will be appreciated that the electrical signal can be capacitive, inductive, resistive or a combination thereof.

In one embodiment there is provided a label comprising:
a substrate layer having a 3-D nanostructured geometry configured with a property that can be optically read or measured; and
the 3-D nanostructured geometry is coated with a metal insulator metal (MIM) capacitive layer to provide an embedded unique electrical signal.

In one embodiment the label is configured to be read by an optical reader and an electrical reader.

In one embodiment the label is configured to be an inductively coupled Radio Frequency Identification (RFID) tag.

In one embodiment the embedded unique electrical signal comprises a physically derived capacitive response data, obtained as a result of the 3-D nanostructured geometry.

In one embodiment the metal insulator metal (MIM) capacitive layer by conformal coating.

In one embodiment the capacitive response data is adapted to be read via RFID and obtained as a result of the electronic material properties inherent to the combination of defining a conformal coating of metal insulator metal layers to form a capacitor over the 3-D nanostructured geometry.

In one embodiment there is provided means for conformally coating the 3-D nanostructured geometries using an atomic layer deposition (ALD) process and retention or enhancement of optical properties is achieved.

In one embodiment there is provided means for intentionally under filling the 3-D nanostructured geometries with refractive materials using an ALD process.

In one embodiment the unique derived capacitive response data can be used as an encryption key to generate a unique barcode or quick response code specific to each label which can be stored and subsequently verified over a communication network, such as a server.

In one embodiment the capacitance response data can be stored as encrypted data within a barcode.

In one embodiment the substrate layer comprises aluminium oxide.

In one embodiment the label comprises an anti-counterfeit label and is configured to be incorporated into at least one of the following: a currency note, a security tag; a ticket; an identity card or passport; a document; food or drink packaging; medical device packaging; medical product label or tag.

### Brief Description of the Drawings

The invention will be more clearly understood from the following description of an embodiment thereof, given by way of example only, with reference to the accompanying drawings, in which:-
Figure 1 (a) Optical image displaying selection of range of colours achieved from anodised aluminium oxide (AAO) at increasing time durations, each row represents repeatability at the same anodisation time.(b) Plan view SEM image of AAO pore morphology.(c) Cross sectional SEM view of AAO (1 µm depth) coated with titanium nitride via atomic layer deposition.(d) Optical image of lithographically patterned Al pillars. (e) Tilted (30°) SEM image of lithographically patterned Al pillars;
Figure 2 (a) Concept schematic depicting completed device including capacitance probe pads for capacitance value extraction. Note: capacitance could also be extracted by contactless radio frequency identification (RFID) methods. The label shown is based on a photograph of a commercial label modified for illustrative purposes only (b) Process flow outlining steps for a hybrid capacitive/optical device on a 3D metal substrate. For an insulating template (e.g., anodised aluminium oxide), the first metal layer could be created using a metal ALD step before step (2) in the process;
Figure 3 illustrates Concept schematic depicting fully integrated device including barcode verification. The concept schematic is based on photographs of commercial packaging, a smart phone and a multi-meter which have been collated and modified for illustrative purposes only.
Figure 4 illustrates another embodiment the 3-tier Nanostructured Anti-counterfeiting technology;
Figure 5 illustrates a SEM image of the label produced according to one embodiment of the invention; and
Figure 6 illustrates a number of non-limiting potential uses of the invention showing images of commercial products collated and modified for illustrative purposes only.

### Detailed Description of the Drawings

The invention provides a label comprising a substrate layer comprising a 3-D nanostructured geometry configured with a property that can be optically read or measured; and the 3-D nanostructured geometry is coated with a metal insulator metal (MIM) capacitive layer to provide an embedded unique electrical signal. In effect the invention enables a hybrid optical-capacitive ID label substrate that can be integrated as part of inductively coupled Radio Frequency Identification (RFID) tag circuit to provide additional security for anti-counterfeit applications.

Compared to existing RFID labels, additional security is achieved through non-cloneable physically derived capacitive response data, obtained as a result of unique self-assembled 3-D nanostructured geometries coated conformally with an ultrathin metal insulator metal (MIM) capacitive stack via atomic layer deposition. Further security is achieved by retention of optical/ iridescence properties of self-assembled 3-D nanostructured geometries through use of said ALD layers to provide an optically patternable platform for logo/design embodiment. The retention of optical properties of self-assembled 3-D nanostructured geometries with a covert embedded capacitive response via ALD represents an important aspect of the invention.

### Method of fabrication of unique 3-D self-assembled geometry:

In one embodiment this is achieved through anodisation of aluminum to form disordered vertical nanoporous aluminum oxide via a one-step anodisation process. A one-step anodisation process is intentionally used over a two-step anodisation process to provide maximum disorder and randomised location of as-fabricated nanopores. It is this randomally organised 3-D geometry that is subsequently used for conformal coating with an ultrathin ALD MIM capacitive stack. In a further embodiment additional recursive disorder can be created by over-anodising the aluminum in the breakdown regime to create randomly located voids of tailorable dimensions (nanometers → microns), which can then also be used for conformal coating with an ultrathin ALD MIM capacitive stack.

### Retention of optical properties:

Retention of optical properties is achieved either through use of transparent materials via ALD to conformally coat the unique self-assembled 3-D nanostructured geometries, and/or by intentionally under filling the unique self-assembled 3-D nanostructured geometries with refractive materials via ALD. For each method the desired effect is to preserve/retain or enhance the iridescence properties inherent to the unique self-assembled 3-D nanostructured geometries.

### Unique capacitive response data:

Unique capacitive response data which can be read via RFID is obtained as a result of the electronic material properties inherent to the combination of defining a conformal coating of metal insulator metal layers to form a capacitor over a unique self-assembled 3-D nanostructured geometry.

The advantage of this anti-counterfeiting technology is that it enables the use of custom nanostructured geometries to produce unique optical and electrical signatures. The usage of in-situ ultrathin conductive/insulating/conductive coatings via atomic layer deposition provides the capability of incorporating metal/insulator/metal capacitive devices while retaining the optical reflectance effects provided by the underlying 3D (e.g., nanopillar) geometries. The tailorable capacitance value obtained can be further embedded as a data value contained within a barcode to provide additional authentication. In another embodiment the barcode itself could be integrated as a readable top electrode creating a self -contained device.

In one embodiment the morphology of the nanostructured bottom electrode produces a unique reflective colour effect which can be tailored to custom designs providing an initial level of security. These colours, in contrast to organic dyes, do not fade over time.

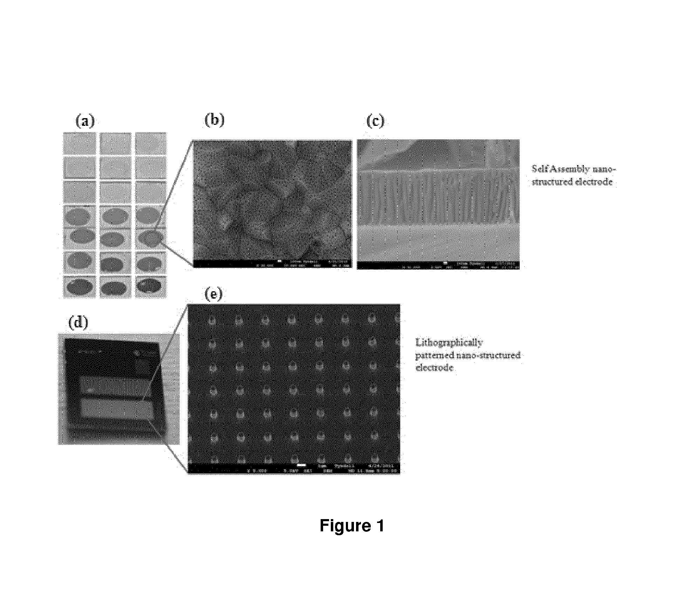

Figure 1 (a) Optical image displaying selection of range of colours achieved from anodised aluminium oxide (AAO) at increasing anodisation time durations, each row represents repeatability at the same anodisation time.(b) Plan view SEM image of AAO pore morphology.(c) Cross sectional SEM view of AAO (1 µm depth) coated with titanium nitride via atomic layer deposition.(d) Optical image of lithographically patterned Al pillars. (e) Tilted (30°) SEM image of lithographically patterned Al pillars.

The addition of the embedded capacitive response provides a higher level of security to the overall device. The capacitance value is derived from atomic layer deposition of a suitable dielectric material (e.g. Al₂O₃, HfO₂, etc.) between atomic layer deposition of ultra-thin metallic coatings (e.g., TiN, Pt, TaN etc.). Since atomic layer deposition provides a conformal coating, the optical properties of the nano-structured substrate are retained while providing a high surface area for increased specific capacitance over a planar equivalent.

This capacitance value is unique and can be tailored to each product. Since both the materials and structure of the capacitor involve high-tech fabrication methodologies it renders forging of the device prohibitive from a technological standpoint.

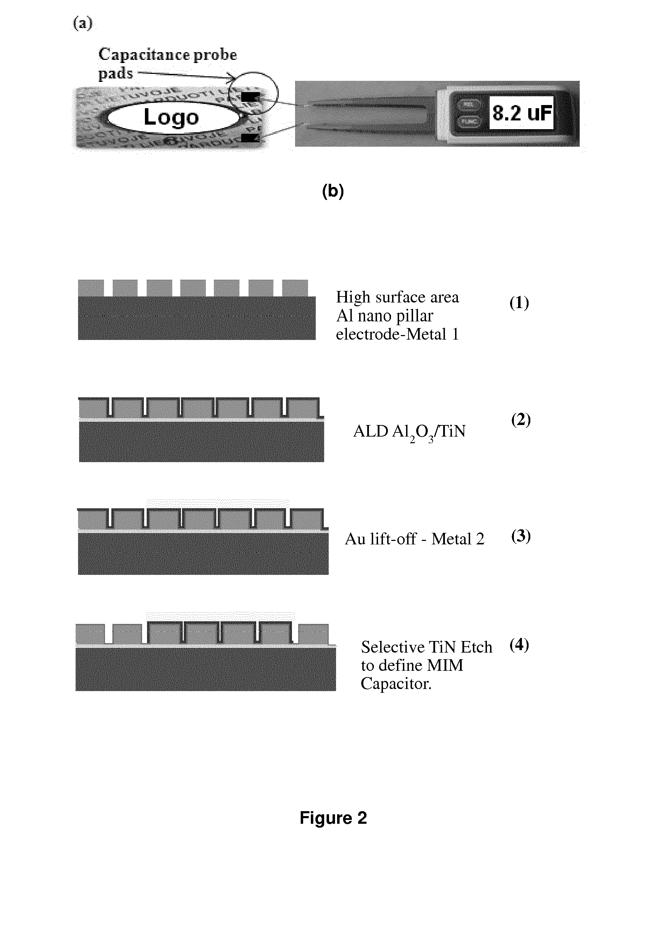

Figure 2 (a) Concept schematic depicting completed device including capacitance probe pads for capacitance value extraction. Note: capacitance could also be extracted by contactless radio frequency identification (RFID) methods. (b) Process flow outlining steps for a hybrid capacitive/optical device on a 3D metal substrate. For an insulating template (e.g., anodised aluminium oxide), the first metal layer could be created using a metal ALD step before step (2) in the process flow depicted above.

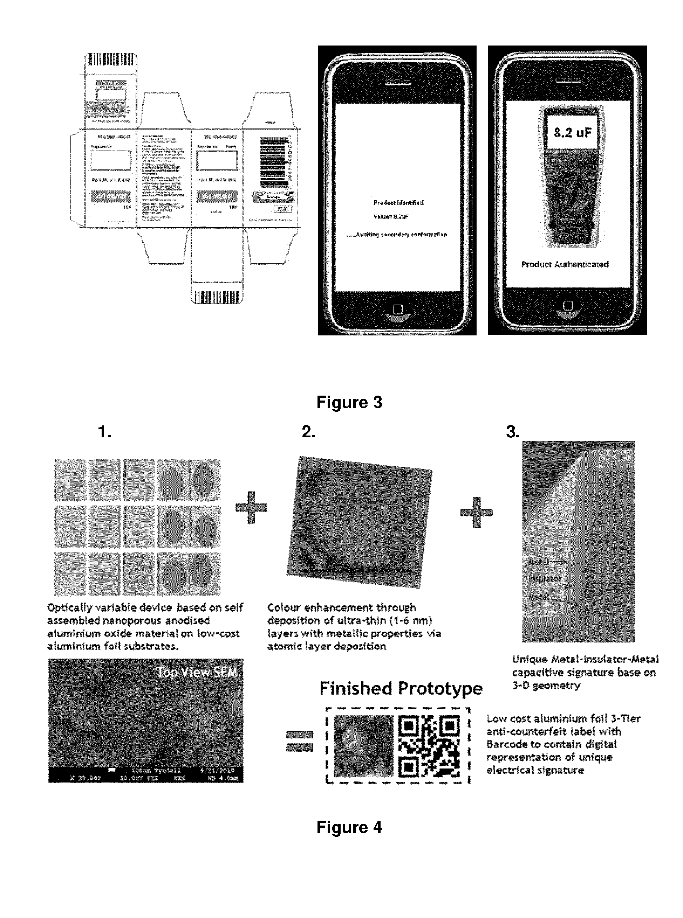

Figure 3(a) Concept schematic depicting fully integrated device including barcode verification. The addition of a readable barcode structure containing information of the capacitance value as verification of authenticity provides a further level of security.

In another embodiment the 3-tier Nanostructured Anti-counterfeiting technology is shown in Figure 4:
1. Optically variable device based on unique self-assembled nanoporous anodised aluminium oxide (AAO) on low-cost aluminium foil substrates.
2. Unique Colour enhancement signature through deposition of ultra-thin (1-100 nm) layers with metallic properties via atomic layer deposition.
3. Unique Metal-Insulator-Metal capacitive signature base on in-situ conformal atomic layer deposition over 3-D nanoporous geometry.
1. Tuning the nanoporous anodised aluminium oxide geometry through careful optimisation of anodisation parameters.
2. Atomic layer deposition development for integrated metal-insulator-metal capacitive platform (process development for TiN metal layer, use of existing processes for Al₂O₃ insulator layer).
3. Prototype fabrication on aluminium films on silicon chips as well as a limited number on low-cost aluminium foil labels.

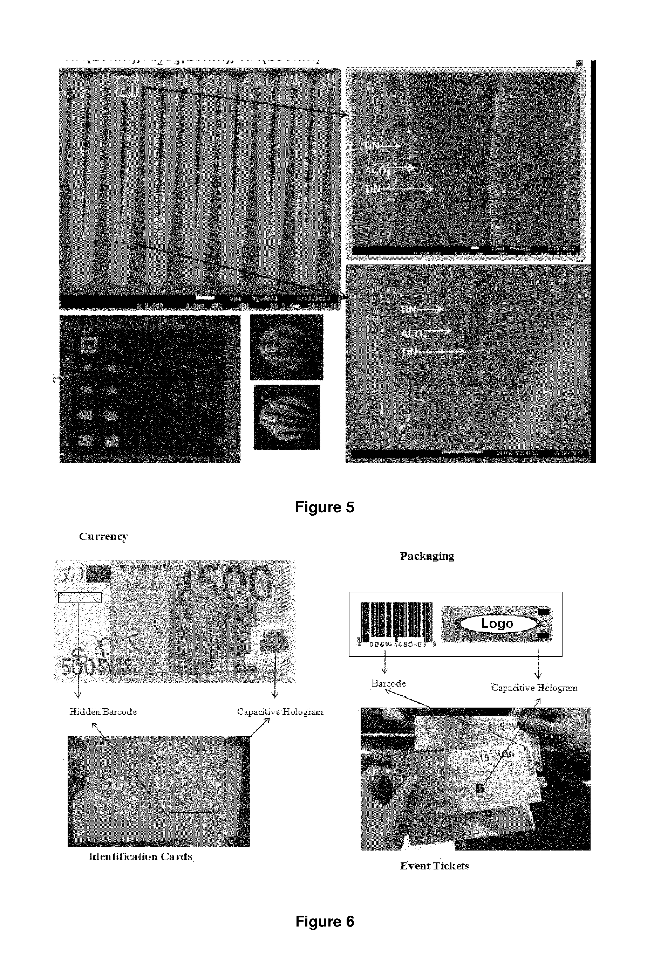

Figure 5 shows a SEM image of the label produced according to one embodiment of the invention. The substrate layer having a 3-D nanostructured geometry configured is shown on the left hand side showing a series of irregular vias. The right hand side shows a close up of the 3-D nanostructured geometry coated with a metal insulator metal (MIM) capacitive layer to provide an embedded unique electrical signal. Two TiN metal layers and a layer of Al₂O₃ makes up the MIM capacitor layer.

It will be appreciated that the resulting optical patterns and electrical properties of the devices/labels can be characterised and assessed to form a database of unique identifiers specific to each label type.

It will be appreciated that the labels of the present invention can be integrated with industry compatible production cycles for RFID tags.

In a further embodiment, the unique derived capacitive response data can be used as an encryption key to generate a unique barcode or quick response code specific to each label which can be stored and subsequently verified over server access.

Figure 6 illustrates a number of non-limiting potential uses of the invention, for example the label is configured to be incorporated into at least one of the following: a currency note, a security tag; a ticket; an identity card or passport; a document; food or drink packaging; medical device packaging; medical product label or tag.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A label comprising:
a substrate layer having a 3-D nanostructured geometry configured with a property that can be optically read or measured; and
the 3-D nanostructured geometry is coated with a metal insulator metal (MIM) capacitive layer to provide an embedded unique electrical signal.

2. The label of claim 1 wherein the label is configured to be read by an optical reader and an electrical reader.

3. The label of claim 1 or 2 wherein the label is configured to be inductively coupled Radio Frequency Identification (RFID) tag.

4. The label of any preceding claim wherein the embedded unique electrical signal comprises a physically derived capacitive response data, obtained as a result of the 3-D nanostructured geometry.

5. The label of any preceding claim wherein the metal-insulator-metal (MIM) capacitive layer comprises a conformal coating.

6. The label as claimed in claims 4 or 5 wherein the capacitive response data is adapted to be read via RFID and obtained as a result of the electronic material properties inherent to the combination of defining a conformal coating of metal insulator metal layers to form a capacitor over the 3-D nanostructured geometry.

7. The label of any preceding claim comprising means for conformally coating the 3-D nanostructured geometries using an ALD process and retention of optical properties is achieved.

8. The label of any preceding claim comprising means for intentionally under filling the 3-D nanostructured geometries with refractive materials using an ALD process.

9. The label as claimed in any of claims 4 to 8 wherein the unique derived capacitive response data can be used as an encryption key to generate a unique barcode or quick response code specific to each label which can be stored and subsequently verified over a communication network, such as a server.

10. The label as claimed in any of claims 4 to 9 wherein the capacitance response data can be stored as encrypted data within a barcode.

11. The label of any preceding claim wherein the substrate layer comprises aluminium oxide or other suitable dielectric material.

12. The label of any preceding claim wherein the label comprises an anti-counter-fit label and configured to be incorporated into at least one of the following: a currency note, a security tag; a ticket; an identity card or passport; a document; food or drink packaging; medical device packaging; medical product labels or tags.
